# EUROPEAN PATENT SPECIFICATION

(11) **EP 1 442 152 B1**
(45) Date of publication and mention of the grant of the patent: **10.03.2010**
(21) Application number: 02799392.2
(22) Date of filing: 23.08.2002
(51) Int. Cl.: C23C 6/00, B32B 43/00, B29C 41/20

(54) **METHOD AND ARRANGEMENT FOR REPARING DAMAGES ON SURFACES WITH A RELIEF DESIGN STRUCTURE, PARTICULARLY SURFACES WHERE THE REFLIEF DESIGN IS REPEATED**
VERFAHREN UND ANORDNUNG ZUR REPARATUR VON SCHÄDEN AUF OBERFLÄCHEN MIT RELIEFDESIGNSTRUKTUR, INSBESONDERE OBERFLÄCHEN MIT SICH WIEDERHOLENDEM RELIEFDESIGN
PROCEDE ET DISPOSITIF DE REPARATION DE SURFACES STRUCTUREES EN RELIEF, EN PARTICULIER DE SURFACES A MOTIFS REPETITIFS

(30) Priority: 24.08.2001 DK 200101264
(43) Date of publication of application: 04.08.2004
(73) Proprietor: Smart Tool Holding ApS, 9530 Støvring (DK)
(72) Inventor: CHRISTENSEN, Niels, Bro, DK-9000 Aalborg (DK); CHRISTENSEN, Henrik, Bro, DK-9270 Klarup (DK)
(74) Representative: Tellefsen, Jens J.
(86) International application number: PCT/DK2002/000555
(87) International publication number: WO 2003/027347

(56) References cited:
- US-A- 4 800 054
- US-A- 5 246 642
- US-A- 6 039 824

## Description

The present invention concerns an arrangement and a method for repairing damages on surfaces with relief pattern, particularly surfaces in which the pattern is repeated.

Sheets with patterns or relief structure are used within many applications and not the least in the area of carriers, mobile homes, refrigerated vehicles, work sheds, personnel carriers, and so on. Aluminium sheets coated with a surface coating are widely used. These sheets have a relief structure pattern which e.g. produced by rolling the sheets. If the sheets are imparted their structured pattern by rolling, the pattern in the sheets will be repeated with the diameter of the roller.

A typical wall for a caravan or a mobile home is built up as a foamed sandwich structure, where the aluminium sheet is often disposed at one side, a foam section in the centre is usually provided by polyurethane foam, and at the other side there are fitted plastic or wood sheets. The wood or plastic sheets serve to provide internal decoration for the caravan or the mobile home, whereas the polyurethane foam in the sandwich structure serves two purposes, namely as thermal insulation and as reinforcement for the two thin sheets. The external aluminium sheet is usually structured or embossed with a pattern as describe above, whereby small dents and irregularities in the sheet appear less, and the strength and resistance against blows and impacts of the sheet are increased.

During use of caravans, mobile homes, refrigerated vehicles, work sheds, personnel cars and the like, it cannot be avoided that the external covering is subjected to actions that leave damages in the surface. This may occur by storm damage where trees, branches and twigs or other objects are thrown onto the structured sheet, or damages may arise as a consequence of violent hail showers. Besides, common traffic damages, such as collisions, parking damages and so on are also a cause for quite a number of accidental damages in the relatively thin, externally arranged aluminium covering sheets.

Traditionally, such damages have been repaired by fitting a new sheet. Firstly, the damaged sheet has been removed in its entirety, after which the polyurethane foam has been repaired, and then a new sheet cut to shape has been fitted and mounted instead of the damaged sheet. This kind of damage repair has appeared to be unusually time consuming and therefore expensive, but has also appeared unsuitable as the price has prevented many from repairing minor damages on their caravans, mobile homes, refrigerated vehicles or similar.

Methods have been developed whereby minor damages or scratches in a structured sheet may be repaired without changing the whole sheet section. These systems utilise that the relief pattern is repeating over a certain distance, whereby impressions are made of the relief surface at an undamaged spot, but at the same relative place in the pattern, after which this impression is used as a mould for impressing a mass which is injected between the damaged surface and the copied pattern. The process with identifying the corresponding spot in the undamaged pattern is rather cumbersome, as a fix point has to be identified manually, after which a slide bar is mounted on the surface with relief pattern. The damage is outlined on a mould plate which is arranged relative to the mounted slide bar. Then is identified a corresponding area with a fix point corresponding to the fix point first found, after which the slide bar is dismounted from the damaged fix point and moved to the undamaged fix point. The mould plate with the damage area outlined is arranged in the same relation to the slide bars as opposite to the damage area. Then a curable mass is injected between the undamaged surface and the mould plate which has been mounted upon the now moved slide bar. After the curable mass having been cured, the slide bar is moved back and remounted at the first fix point, after which the mould plate with a cast of the undamaged area is remounted on the slide bar at the first fix point, so that the mould plate is arranged correctly in relation to the first fix point. Then a second curable mass is injected in the interspace between the damaged part of the surface and the cast of the undamaged part. After the second curable mass has been cured, the mould plate including the first cured mass and the slide bar are removed. Now the filled damage may be cleaned, made to fit and finished so that it coincides with the surface structure on the surrounding sheet.

This method is very demanding and requires quite a lot of accuracy of the personnel performing the method, as the fix points have to be identified very accurately, as well as it is very important that the mould plate is mounted 100% correctly in relation to the fix point and slide bar. Even a slight deviation in either angular displacement of the slide bar or of the position of the mould plate in relation to the fix point will mean the repair becoming very visible and always identifiable.

Thus there is a need for further development of this method so that the embodiment becomes less sensitive to the operator, and so that it may be ensured with greater certainty that a repair is made so as to be completely invisible.

It is therefore the purpose of the present invention to provide a method and an arrangement whereby it becomes possible to facilitate and to improve the methods of repair, so that a better final result is feasible.

This purpose is achieved by the invention according to a method which is peculiar in that
a) a fix point is identified in the relief pattern, and a first slide bar is mounted relative to the fix point in immediate vicinity of the damage;
b) a mould plate is mounted on the first slide bar by means of fixing means for securing the mutual position of the mould plate and the first slide bar, and the damaged area is outlined on the mould plate;
c) a second fix point with identical position in relation to the repeated pattern placed in an undamaged part of the surface with relief pattern is identified, and a second slide bar identical with the first slide bar is mounted having the same relation to a second fix point as the first slide bar has with the first fix point, and the second slide bar is arranged in parallel with the first slide bar,
d) the mould plate with the outlined damage is mounted on the second slide bar by fixing means,
e) a first curable mass is injected through one or more through-going holes in the mould plate such that the tendency of the curable mass to adhere to the mould plate is greater than the tendency of the mass to adhere to the relief surface,
f) when the first curable mass is cured, the mould plate is dismounted with the cured first mass attached to the mould plate; and
g) mould plate with cured first mass is re-mounted by means of the fixing means on the first slide bar at the initial distance to the fix point,
h) a second curable mass is injected into the interspace between the damaged surface and the first cured mass,
i) when the second mass is cured, the mould plate is dismounted with the first hardened mass and the slide bars,
and an arrangement for repairing damages on surfaces, which is peculiar in including one or more slide bars, one or more mould plates and two curable masses, and that
- the slide bars are arranged so that they may be fastened detachably to a surface with relief pattern, furthermore they comprise fixing means for fixing one or more mould plates in relation to the slide bar and an index point in the slide bar, which may be arranged on a fix point on the surface with relief pattern;
- the mould plates are arranged with a fastening area where the plates may be fastened detachably to the surface with relief pattern and to a working area in which there is arranged one or more through-going holes and fixing means corresponding to the fixing means arranged in the slide bar;
- a first curable material with a greater tendency to adhere to the mould plate than to the surface with relief pattern;
- a second curable material with very great tendency to adhere surface with relief patter and a very small tendency to adhere to the first curable mass.

As described above, the arrangement is made up of four main elements, namely slide bars, mould plates and two different curable masses.

The slide bars, of which one is mounted in immediate vicinity of the damaged area and another is mounted at another place on an undamaged area, may be identical. They have identical fixing means arranged for fixing the mould plates. The fixing means may e.g. have shape as dovetails, where in the slide bar there are arranged female dovetails whereas in the mould plates there are arranged corresponding male dovetails. Alternatively, the male and female members may be in the shape of triangular cut-outs or projections or any other contour with which two plane surfaces may be mutually fixed.

In an embodiment of the invention, a spirit level may be built into the slide bar for facilitating the mounting procedure at the setting-up of the slide bars.

In the prior art method as described above, the slide bar is glued onto the surface, after which the damaged area is outlined on the mould plate. Both slide bar and mould plate are then taken down after which a fix point corresponding to the first fix point is found again on an undamaged part of the surface, after which the slide bar is bonded to the surface again, and the mould plate is mounted in the correct position relative to the slide bar and the fix point. By using two slide bars as in the present invention, one avoids to move the slide bar back and forth, but may leave it while moving the mould plate from one slide bar to the other slide bar. By furthermore providing fixing means in the slide bar, one avoids getting marking or measuring errors, as the mould surface readily fits into the fixing means and is safely held by means of e.g. dove tail means and is secured by means of e.g. dovetail joints in relation to the fix points. In this way is achieved far greater security of having mounted the mould plate in correct positions, whether in relation to the damaged or to the undamaged area, a fact having large influence on the quality of the repair.

Caravans and mobile homes are mainly made of three different types of relief sheets of the above type, and these three different types of sheets cover about 95% of all caravans and mobile homes in the western world. The sheets mainly differ in their pattern structure and the length which the pattern has between each repetition. By arranging the fixing means with a distance corresponding to the distance of the different repetition measures from the three different sheets, it may thereby be achieved that the patterns in a damaged and in an undamaged section may be rediscovered very easily. Any kind of measuring uncertainty and determination of the fix point may thereby be avoided.

In the prior art method of making as described above, the slide bars are bonded to the surface. By being able to fasten the slide bars, e.g. by vacuum, a far more rapid and convenient process is achieved. Correspondingly, one may advantageously use suction cups for fastening the slide bars on the surface. In a preferred embodiment of the invention, a vacuum technique is used, where at the side of the slide bar intended to face and be fastened on the surface there is arranged an area which is limited by a seal within which area vacuum may be produced via a connection in the plate to an external source of vacuum, so that the slide bar sucks to the surface. When the slide bar is to be removed again, the vacuum within the sealed area is to be removed, e.g. by opening a valve at the outer side so that atmospheric pressure comes into the vacuum compartment, after which the slide bars quickly and readily may be removed from the surface.

The plates, both slide bars, mould plate and adapter plate in the present invention are characterised by a relatively large area compared to the thickness. The area is limited by sides on/out from or in which for example fixing means are arranged.

The mould plates, like the slide bars, have fixing means of corresponding kind, whereby the mould plates may be securely fixed in relation to the slide bars. Hereby is achieved that the mould plate may be placed correctly in relation to a fix point at the damaged area and may also in an easy and simple way by mounting or fixing a corresponding fixing means in the second slide bar mounted in an undamaged area be mounted accurately, so that an accurate impression of the surface structure after repair of the damage may be provided. This is ensured by disposing the mould plates with fixing means in the corresponding fixing means in both slide bars, whereby an accurate copy of the pattern is achieved, as the measure of the repeated pattern will be identified by measuring to the fix points.

Depending on the fix points being correctly identified in the damaged and the undamaged area, respectively, and that the slide bars have been correctly and uniformly placed in relation to the two fix points, the fixing means ensure a firm and uniform positioning, so that the mould plates are correctly mounted opposite the damaged and the undamaged area.

The mould plates are divided into two areas: a fastening area and a working area.

In the working area there are arranged a number of holes and possibly indentations in the side facing the surface to be treated. These indentations are provided in order to increase the adhering of the first curable mould mass.

The fastening area is reserved for an arrangement for fastening the plate to the surface. As was the case with the slide bars, by a preferred embodiment of the invention there were arranged one or more areas encircled by a flexible seal within which vacuum could be created via a connection from the vacuum area and to a source of vacuum arranged outside the plate. Besides, the mould plates may be detachably fastened to the surface in the same way as the slide bars.

The mould plates may advantageously be made in completely or partly transparent material. By making the mould plates in an entirely or partly transparent material, a number of advantages are achieved. Firstly, it is to be ensured that the working area on the mould plate is placed opposite to the damage, as one may see where the damage is through the mould plate. Furthermore, with a speed marker one may outline the contour of the damage and some extra area where the structure is desired to be recreated later. When the first curable mass is injected through one of the holes in the working area, one may also, when the plate is entirely or partly transparent, supervise the propagation of the injected material, whereby the injection may be interrupted when there is injected an area corresponding to the extent of the damage outlined with speed marker plus some overlap.

Preferred materials are thus plate materials made of acrylate, polycarbonate or glass. Particularly preferred are materials which have been de-stressed either in the mould process or by a later heat action. By de-stressing the plate materials, these become less sensitive to notch influence and other crack-forming influences which the plates are subjected to.

In addition to plane surfaces on caravans or mobile home which can be subjected to damages, there are also curved surfaces which may be damaged. The invention also comprises variants of the mould plates where the mould plate material is very flexible, so that it may be shaped to follow a single curved contour of the surface to be treated. The mould plates are normally quadrangular, e.g. quadratic or rectangular, but any shape of the mould plates may otherwise be used. In the particular case where impressions are to be made of a single curved surface, it is particularly advantageous to use quadrangular plates. Fixing means are arranged at two opposite, parallel sides of the flexible mould plate, whereby by the method for repairing a damaged area, two slide bars are mounted for fastening two opposite ends of the mould plate, so that the mould plate can be secured along the curved surface. Moreover, the mould face for the singularly curved surfaced may be divided in the same or corresponding way as mould plates used on plane surfaces, i.e. a fastening area and a working area may be provided. For repairing damages on curved surfaces, four slide bars or two integrated slide bars have to be used.

Another version of the mould plates is where damage has occurred close to a curved plane surface, where a rectangular or quadrangular plate will project beyond the edge of the surface. For this purpose, quadratic or rectangular mould plates cannot be used. For this application, the invention includes mould plates with at least one rounded corner corresponding to the curvature on the plate. Furthermore, the fastening area and the working area are suitably arranged in relation to the position of the damage on the surface.

In a preferred embodiment, the first curable mass is a fluid mass which is injected through the holes arranged in the mould surface in the cavity between the undamaged surface and the surface of the mould plate. Hereby is formed an impression of the undamaged surface during and after the curing of the first curable mass at a place corresponding precisely to the place in the pattern in a different place to where the damage has occurred. In order to draw the injected and cured mass off the surface, it is necessary that the tendency of the first curable mass to adhere to the undamaged surface is very poor. This may either be provided by the material having poor adherence to the surface material or to prepare the surface material with a release agent before injection is performed with the first curable mass. Conversely it is to be ensured that after curing, the first curable mass has sufficient ability to adhere to the mould plate so that it is securely fastened to the mould plate when this is dismounted. In order to amplify this adhering, indentations may be provided in the working area of the mould plate, whereby the surface for the first curable mass after the injection becomes substantially greater than outside the indentations.

In a further preferred embodiment of the invention, the second curable mass is also a fluid material, as it is desirable to place the material by injection. In an alternative embodiment, the second curable mass may have putty-like texture, as the damaged area is filled with a portion of the second curable mass before remounting the mould plate.

In the embodiment in which it is preferred to inject the material, the mould plate is remounted on the first slide bar so that the cast of the undamaged area covers the damaged area, after which a portion of material may be injected with a syringe or the like passed through the first cured mass in the hole arranged in the mould plate into the damaged area between the damaged surface and the first cured mass. Hereby the damage is filled so that the surface is covered with the new material simultaneously with the new material being provided a surface structure corresponding to a mirror image of the relief or embossing produced in the first cured mass.

In an alternative embodiment, where the damaged area is filled with a second curable mass with putty-like texture, the mould plate is placed over the damaged area, and simultaneously with the mould plate with the impression of the undamaged surface in the first curable mass being pressed against the still uncured second curable mass with putty-like texture, fixing means from the mould plate catch the corresponding fixing means in the slide bar.

Common to the second curable mass, whether used in a method where material is injected or applied as a putty-like texture, is that the material is to have good adhering ability with regard to the surface material. This adhering may possibly be improved by applying a primer. The second curable mass is to attain great permanent strength and to have thermal expansion corresponding to what may be expected of the surrounding sheet material. This is due to the fact that the repair, unless it has corresponding thermal expansion coefficients, will form cracks when the surface or the sheet is exposed to temperature fluctuations. Furthermore, the second curable material may not exhibit creep during the curing process, as this also will produce cracks around the repair.

The adhering ability against the first curable mass is, however, to be poor, as after finished curing of the second curable mass, the mould plate is dismounted with the impression made in the first curable mass. It is therefore important that the first curable mass easily separates from the second curable mass. This may possibly be provided in that the first curable mass, subsequent to making the impression on the undamaged part of the structure and the first mass being cured, is applied a release agent whereby a separating layer is inserted between the first and the second mass.

Besides the four basic elements for building up the arrangement and for use in the method, the method as well as the arrangement may be supplemented with adapter plates. Where the damage or damages in the relief surface are oblique or particularly oblong and/or oblique, the mould face may advantageously be turned relative to the slide bar in order thereby to achieve that the working area on the mould plate is provided with as great an extension as possible in relation to the damage. In a further, preferred embodiment, the invention hereby anticipates that an adapter plate may be arranged between the slide bar and the mould plates, where two sides of the adapter plate are mutually turned with arbitrary angular displacement so that an arbitrary angle between the mould plate and the slide bar may be provided. In particularly preferred embodiments of the adapter plates, they are triangular, where the angles in one example is 30°, 60°, 90°, or in another preferred embodiment the angles are 45°, 45° and 90°.

In a further, preferred embodiment of the invention, the arrangement for improving damages in relief surfaces is supplemented with three master plates. As described above, about 95% of all caravans and mobile homes are made by using only three differently embossed surface sheets. By thus supplementing examples of these three plates with the arrangement, the user is always ensured access to an undamaged clean and plane reference plate in which casting of the undamaged surface structure may be performed. This is a great advantage as caravans and mobile homes are often made as very light structures, whereby the sheets used for walls, floors and ceilings often over time and due to external influences come out of plane. A casting on an undamaged place on the surface is possibly not quite plane why the produced impression will not fit 100% to the area around the damaged area even if the pattern is identical. In order thereby to have access to a master plate being 100% level, impressions in the first curable mass may be produced that will fit into and coincide with the damaged area with greater probability.

In a further preferred embodiment, the first and second slide bars may be an integrated unit with a certain extent. Hereby is achieved that the integrated slide bar is only to be mounted at one position relative to one fix point. Then the mould plate is mounted in a fixing means outside the damaged area. The damage is outlined e.g. with a speed marker on the completely or partly transparent mould plate, after which the mould plate is moved to another fixing means in an undamaged area where an impression is made as described above. When the cured impression is finished, the mould plate is moved back into the initial position, after which the second curable mass is either injected or pre-filled in the damage in order to finish the repair as described above. This is thus a simplified method which has a great security that the damage is mended in the best possible way.

Corresponding to the three surface structures and pattern lengths as described above, which cover about 95% of all sheets used for caravans and mobile homes, there may also be made slide bars whereby the fixing means are arranged in a fixed modular dimension corresponding to the repetition measure in the three different patterns. Hereby it is necessary with one slide bar, where at one side there are arranged fixing means in modular dimension corresponding to one type of sheet, and on the other side there are arranged fixing means corresponding to the modular dimension on a second type of sheet and a second slide bar with fixing means arranged in modular dimension corresponding to the third type of sheet. Hereby is achieved that repair may be performed in a relatively simple way as there only has to be provided identification with regard to the surface pattern corresponding to sheet type 1, 2 or 3, after which a fix point is identified. The repair is then made as described above.

After repair having been made, the damage area may be surface treated by commonly know techniques, such a spray varnishing or other treatments in order to have the repair area to assimilate with the surrounding surface, colour and pattern.

As material for the first curable mass, a product may be used which is sold under the name "Mould Maker 021" and distributed by HBC International ApS of Svenstrup, Denmark. As material for the second curable mass there may be used a material which is sold under the name "E-Filler med hærder", product code 756, also distributed by HBC International ApS of Svenstrup, Denmark.

Above, the invention is explained with basis in aluminium sheets with a surface treatment and a relief structure, but the invention is also applicable to other materials, such as steel, plastic, glass fibre, and so on. The curable materials are here to be selected with particular emphasis on their respective adhesive ability with regard to the other materials as describe above.

The invention will now be described in detail with reference to the accompanying drawing, in which:
- Fig. 1: shows a plan view of a slide bar;
- Fig. 2: shows a plan view of a mould plate;
- Fig. 3: shows a plan view of a corner mould plate;
- Fig. 4: shows a plan view of an adapter plate;
- Fig. 5: shows a cross-section of a working area as illustrated by the arrows A-A in Fig. 2; and
- Fig. 6: shows a mould plate mounted over a outlined-up damage.

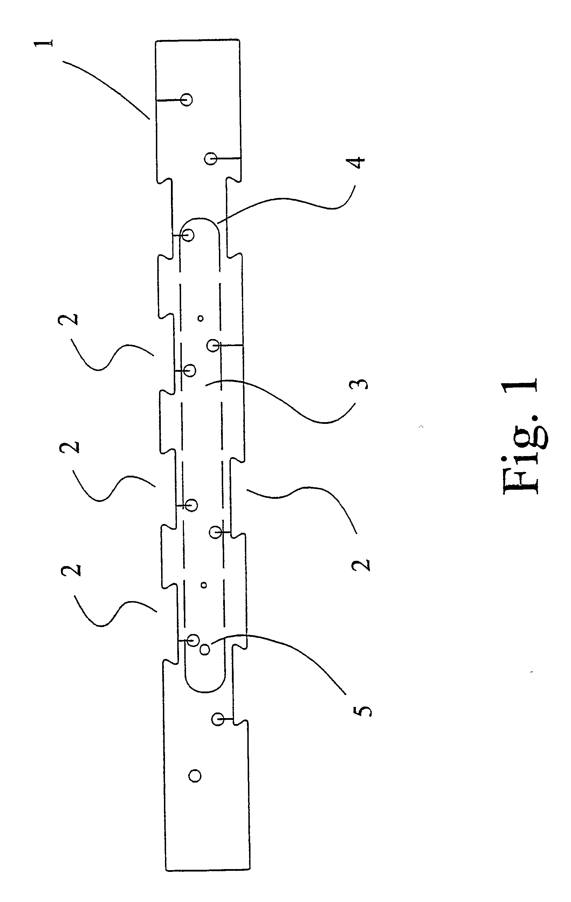

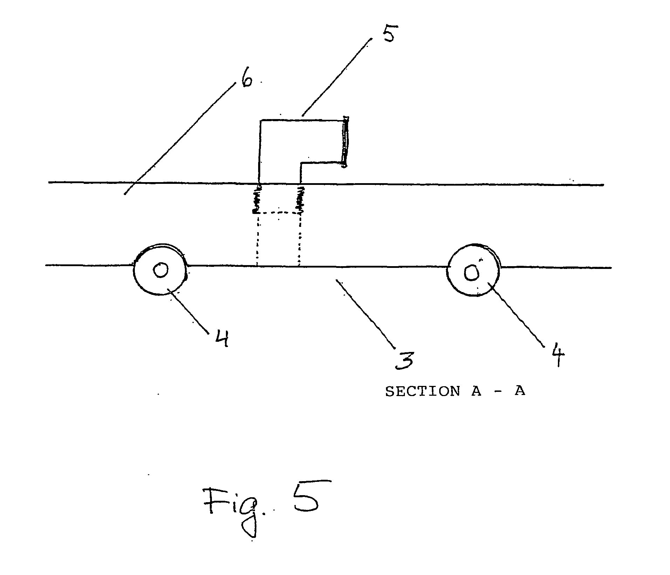

In Fig. 1 is illustrated a slide bar 1 according to the invention where at both sides of the slide bar 1 fixing means 2 are arranged. The distance between two juxtaposed fixing means 2 corresponds to the repetition distance between two repeated patterns on the structured or embossed surface of one of three main types of structured patterned sheets. At a centre section of the slide bar is seen a fastening area 3 encircled by a flexible seal 4 and a passage 5 for connecting to a vacuum source (not shown). In Fig. 5 is shown an example of a cross-section of a plate in the fastening area. In the present example, the slide bar 1 is made of e.g. 10 mm transparent acrylate, but may also be made of polycarbonate or glass. The outline of the slide bar may be made by laser cutting, abrasive water cutting, by moulding in a plastic moulding machine, or other known plastic shaping methods. All elements in the invention may be made according to the said methods.

A particularly advantageous method of producing slide bars, mould plates and adapter plates is making items in clear or partly clear acrylate which is shaped by laser cutting. By using the laser cutting, one may work with very close tolerances as well as the risk of damaging the items is very small. By working with very close tolerances, there is achieved a much greater accuracy of placing the mould plates in relation to the fixing means in the slide bars. Hereby is achieved that duplication of the pattern as described above becomes very precise, why the result of the repair is optimised.

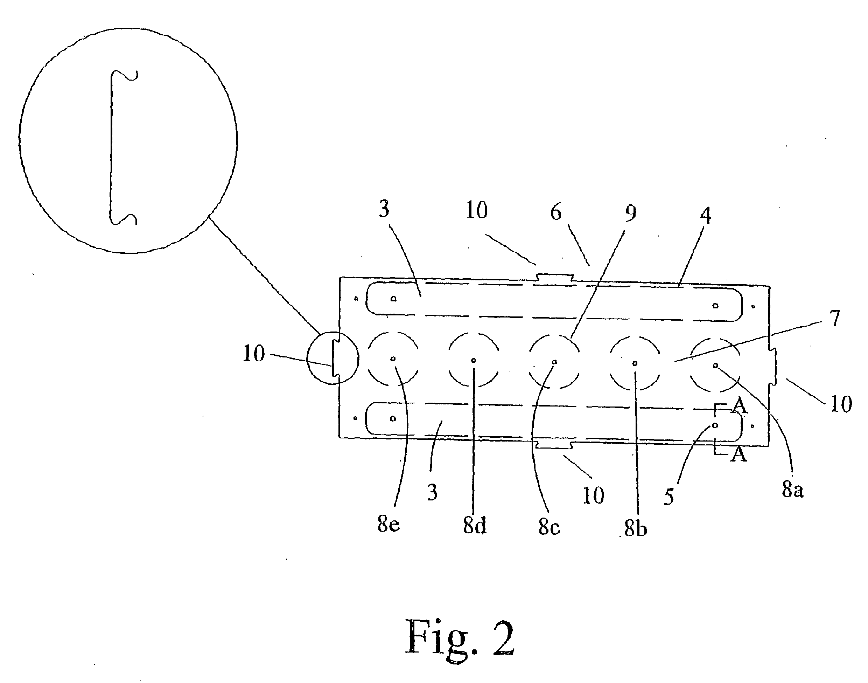

In Fig. 2 is illustrated a mould plate 6 according to the invention. In parallel with the long sides on the mould plate 6 there are arranged fastening areas 3 according to the same principle as illustrated above in connection with Fig. 1. In the working area 7 of the mould plate there are arranged a row of holes 8a, 8b, 8c, 8d and 8e through which the two curable masses may be injected. In a further embodiment of the invention, in the working area, there are arranged indentations 9 at the side where the first curable material is to adhere to the mould plate 6. The indentations 9 in the plate material have the purpose of enhancing the adhering ability of the first curable mass against the mould plate so that the mass sticks to it when the mould plate is dismounted from the undamaged area. Along the four sides of the mould plate 6 there are arranged fixing means 10 corresponding to the fixing means arranged in the slide bar 1. In the shown example, the fixing means 10 are shaped as male and female dovetails, so that the mould plate with male dovetails easily and accurately may be mounted in the slide bar 1 where there are female dovetails as fixing means 2.

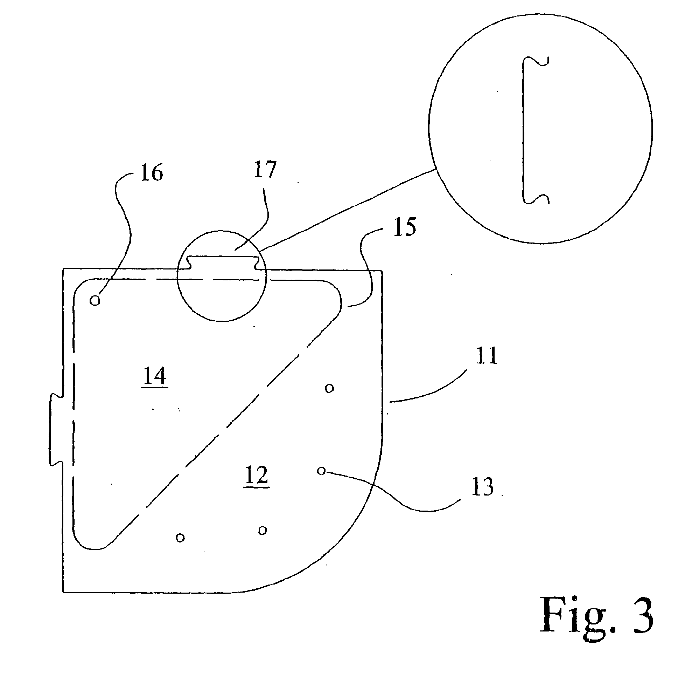

In Fig. 3 there is illustrated a plate particularly suited for mending repairs in a corner part of a relief surface element. The corner mould plate 11 has a working area 12 in which is arranged a number of injection holes 13 and a fastening area 14 encircled by a flexible seal 15 and a boring 16 for connection of an external vacuum source (not shown). In the shown example, the corner mould plate is shown as a 90° corner angle, but any arbitrary angle may be used for forming a corner plate.

The corner mould plate 11 is also provided with fixing means 17, in this case in the form of male dovetails.

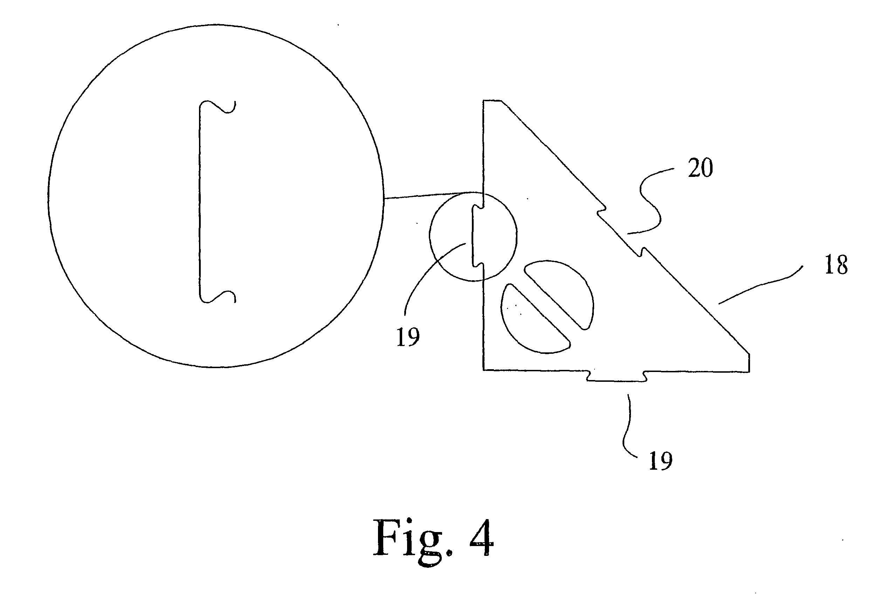

Fig. 4 illustrates an adapter plate where it is triangular and has the angles 45°, 45° and 90°. The adapter plate 18 is intended for arranging the mould plate at an angle of 45° relative to the slide bar. The adapter plate is provided with both male and female fixing means 19, 20. The male fixing means 19 are thus provided for engaging the fixing means 2 of the slide bar, and correspondingly the female fixing means 20 are provided for engaging the male fixing means 10 arranged on the mould plate 6 or the corner mould plate 11. In this case, the adapter plate is shown as a triangle where the angles are 45°, 45° and 90°, but any combination of angles may be used as well as the plate may also be formed with four sides.

By arrows A-A in Fig. 5 is illustrated a section through the mould plate in Fig. 2, as a boring 5 for connecting an external vacuum source with a through-going hole in the mould plate 6 is illustrated. The fastening area 3 is seen encircled by a flexible seal 4. In the shown example, the seal is a hollow round seal, but the seal may have arbitrary shape, such as triangular, quadrangular, rectangular, oval, and so on. The main purpose of the seal is to be so flexible so that it forms a largely airtight connection between the mould plate 6 and the slide bar 1, respectively, and the surface to be repaired. For further ensuring the tightness between the seal and the relief surface, the seal may be coated with a gel, e.g. Vaseline or the like before mounting on the surface. In this case, the illustrated seal is laid in with a groove but may alternatively be glued to the underside of the mould plate 6 and the slide bar 1, respectively, as long as it is ensured that a preferably airtight connection in the situation of use as described above is provided.

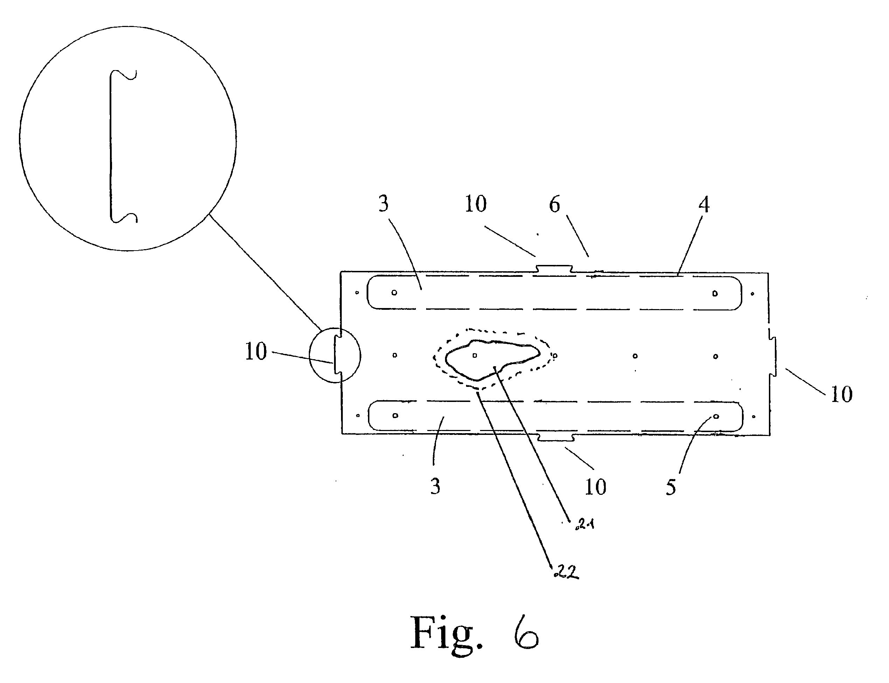

In Fig. 6, a mould plate 6 is schematically placed upon a damaged area 21. Slide bar and possible adapter plates are not shown in this case. Around the damaged area is drawn a circumference 22 corresponding to the damaged area plus an overlap. By later injection on an undamaged part of a sheet with corresponding surface pattern, it may be ensured that the first curable mass is provided an extent at least corresponding to the damaged area by injecting enough material for it to run out corresponding to the drafted circumference 22.

## Claims

1. A method for repairing damages on surfaces with relief pattern, particularly surfaces in which the relief pattern is repeated, **characterised in that**
a) a fix point is identified in the relief pattern, and a first slide bar (1) is mounted relative to the fix point in immediate vicinity of the damage;
b) a mould plate (6) is mounted on the first slide bar (1) by means of fixing means (2, 10) for securing the mutual position of the mould plate and the first slide bar, and the damaged area is outlined on the mould plate;
c) a second fix point with identical position in relation to the repeated pattern placed in an undamaged part of the surface with relief pattern is identified, and a second slide bar (1) identical with the first slide bar is mounted having the same relation to a second fix point as the first slide bar has with the first fix point, and the second slide bar is arranged in parallel with the first slide bar,
d) the mould plate (6) with the outlined damage is mounted on the second slide bar by fixing means (2, 10),
e) a first curable mass is injected through one or more through-going holes (8a to 8e) in the mould plate (6) such that the tendency of the curable mass to adhere to the mould plate is greater than the tendency of the mass to adhere to the relief surface,
f) when the first curable mass is cured, the mould plate (6) is dismounted with the cured first mass attached to the mould plate; and
g) mould plate with cured first mass is re-mounted by means of the fixing means on the first slide bar at the initial distance to the fix point,
h) a second curable mass is injected into the interspace between the damaged surface and the first cured mass,
i) when the second mass is cured, the mould plate is dismounted with the first hardened mass and the slide bars.

2. A method according to claim 1, **characterised in that** the method steps g) and h) are substituted with steps g1), g2) and h1), where:
g1) the mould plate is dismounted with the cured first mass attached to the plate,
g2) a second curable mass is applied onto the damaged area in an amount sufficient to fill up the damage;
h1) the mould plate with the hardened first mass attached to the plate is pressed into the not yet cured second mass simultaneously with the fixing means in plate and slide bar are engaging.

3. A method according to claim 1 or 2, **characterised in that** the first curable mass is Mould Maker 021, and that the second curable mass is E-filler with hardener 756.

4. A method according to one or more of claims 1- 3, **characterised in that** an adapter plate (18) may be arranged between slide bar (1) and mould plate (6), and that the adapter plate has two sides with a certain mutual angular displacement, preferably 30° and/or 45°, whereby the mould plates may be arranged in a corresponding angle relative to the slide bar.

5. An arrangement for repairing damages on surfaces with relief pattern, particularly surfaces, where the relief pattern is repeated, consisting of one or more slide bars (1), one or more mould plates (6) and two curable fluid masses, in which:
- the slide bars (1) are arranged so that they may be fastened detachably to a surface with relief pattern, furthermore they comprise fixing means (2) for fixing one or more mould plates (6) in relation to the slide bar (1) and an index point in the slide bar, which may be arranged on a fix point on the surface with relief pattern;
- the mould plates (6) are arranged with a fastening area (3) where the plates may be detachably fastened to the surface with relief pattern and to a working area (7) in which there is arranged one or more through-going holes (8a to 8e) and fixing means (10) corresponding to the fixing means (2) arranged in the slide bar;
- a first curable material with a greater tendency to adhere to the mould plate than to the surface with relief pattern;
- a second curable material with very great tendency to adhere to the surface with relief patter and a limited tendency to adhere to the first curable mass.

6. An arrangement according to claim 5, **characterised in that** the arrangement includes one or more adapter plates (18) having one or more fixing means (19, 20) along their sides corresponding to the fixing means (2, 10) of the slide bar (1) and of the mould plate (6), respectively, and that two of the sides of the adapter plate are arranged with an arbitrary mutual angle, and that fixing means are arranged in the said two sides.

7. An arrangement according to claim 5 or 6, **characterised in that** there are arranged plural fixing means in each slide bar with a mutual distance corresponding to the distance of repetition in a relief surface pattern.

8. An arrangement according to claim 7, **characterised in that** at two side surfaces of the slide bars there are arranged fixing means so that the distance between the fixing means at one side correspond to a pattern repetition distance and the distance between the fixing means at another side corresponds to a second pattern repetition distance.

9. An arrangement according to one or more of claims 5 - 8, **characterised in that** one or more mould plates and slide bars are made in an entirely or partly transparent material, as e.g. acrylic, glass or polycarbonate.

10. An arrangement according to one or more of claims 5 - 9, **characterised in that** one variant of the mould plate is made of a flexible material, and that fixing means are arranged at two opposite parallel sides of the mould plate.

11. An arrangement according to one or more of claims 5 - 10, **characterised in that** one variant of the mould plate is plane and shaped with one curved side face.

12. An arrangement according to one or more of claim 5 - 11, **characterised in that** slide bars (1) and mould plates (6) are detachably mounted by means of vacuum, where in the fastening area of slide bars and mould plates, respectively, there are arranged one or more areas (3) encircled by a flexible seal (4), and that within each area there are connecting means (5) for a source of vacuum.

## Patentansprüche

1. Verfahren zur Reparatur von Schäden auf Oberflächen mit einem Reliefmuster, insbesondere auf Oberflächen mit sich wiederholendem Reliefmuster, **dadurch gekennzeichnet, dass**
a) in dem Reliefmuster ein Fixpunkt ermittelt wird, und eine erste Gleitschiene (1) relativ zu dem Fixpunkt in einer unmittelbaren Nachbarschaft des Schadens angebracht wird;
b) eine Werkzeugplatte (6) an der ersten Gleitschiene (1) mittels Befestigungsmitteln (2, 10) zum Festlegen der gegenseitigen Lage der Werkzeugplatte und der ersten Gleitschiene angebracht wird, und der beschädigte Bereich auf der Werkzeugplatte angezeichnet wird;
c) ein zweiter Fixpunkt mit identischer Position bezüglich des sich wiederholenden Musters, welcher in einem unbeschädigten Teil der Oberfläche mit einem Reliefmuster angeordnet ist, ermittelt wird, und eine zweite Gleitschiene (1), welche mit der ersten Gleitschiene identisch ist, derart angebracht wird, dass sie zu dem zweiten Fixpunkt in derselben Beziehung steht wie die erste Gleitschiene zu dem ersten Fixpunkt, und die zweite Gleitschiene parallel zu der ersten Gleitschiene angeordnet ist;
d) die Werkzeugplatte (6) mit dem angezeichneten Schaden an der zweiten Gleitschiene mittels Befestigungsmitteln (2, 10) angebracht wird;
e) eine erste aushärtbare Masse durch eine oder mehrere Durchgangsöffnungen (8a bis 8e) in der Werkzeugplatte (6) derart injiziert wird, dass die Neigung der aushärtbaren Masse, an der Werkzeugplatte anzuhaften, größer ist als die Neigung der Masse, an der Reliefoberfläche anzuhaften;
f) wenn die erste aushärtbare Masse ausgehärtet ist, die Werkzeugplatte (6) mit der an der Werkzeugplatte anhaftenden ausgehärteten ersten Masse abmontiert wird; und
g) die Werkzeugplatte mit der ausgehärteten ersten Masse mittels der Befestigungsmittel an der ersten Gleitschiene in dem anfänglichen Abstand zu dem Fixpunkt erneut angebracht wird;
h) eine zweite aushärtbare Masse in den Zwischenraum zwischen der beschädigten Oberfläche und der ersten ausgehärteten Masse injiziert wird;
i) wenn die zweite Masse ausgehärtet ist, die Werkzeugplatte mit der ersten ausgehärteten Masse und den Gleitschienen abmontiert wird.

2. Verfahren nach Anspruch 1, **dadurch gekennzeichnet, dass** die Verfahrensschritte g) und h) durch die Schritte g1), g2) und h1) ersetzt werden, wobei:
g1) die Werkzeugplatte mit der an der Platte anhaftenden ausgehärteten ersten Masse abmontiert wird;
g2) eine zweite aushärtbare Masse in einer zum Ausfüllen des Schadens hinreichenden Menge auf den beschädigten Bereich aufgebracht wird;
h1) die Werkzeugplatte mit der an der Platte anhaftenden ausgehärteten ersten Masse in die noch nicht ausgehärtete zweite Masse eingedrückt wird, wobei gleichzeitig die Befestigungsmittel in der Platte und der Gleitschiene ineinandergreifen.

3. Verfahren nach Anspruch 1 oder 2, **dadurch gekennzeichnet, dass** die erste aushärtbare Masse Mould Maker 021 ist, und dass die zweite aushärtbare Masse E-filler mit Härter 756 ist.

4. Verfahren nach einem oder mehreren der Ansprüche 1 bis 3, **dadurch gekennzeichnet, dass** eine Adapterplatte (18) zwischen der Gleitschiene (1) und der Werkzeugplatte (6) angeordnet werden kann, und dass die Adapterplatte zwei Seiten aufweist, welche um einen gewissen Winkel gegeneinander versetzt sind, vorzugsweise um 30° und/oder 45°, wobei die Werkzeugplatten in einem entsprechenden Winkel in Bezug auf die Gleitschiene angeordnet werden können.

5. Anordnung zur Reparatur von Schäden auf Oberflächen mit einem Reliefmuster, insbesondere Oberflächen mit sich wiederholendem Reliefmuster, mit einer oder mehreren Gleitschienen (1), einer oder mehreren Werkzeugplatten (6) und zwei aushärtbaren flüssigen Massen, wobei:
- die Gleitschienen (1) derart angeordnet sind, dass sie ablösbar an einer Oberfläche mit einem Reliefmuster befestigbar sind, wobei sie weiterhin Befestigungsmittel (2) zur Befestigung einer oder mehrerer Werkzeugplatten (6) bezüglich der Gleitschiene (1) sowie einen Markierungspunkt in der Gleitschiene aufweisen, wobei der Markierungspunkt an einem Fixpunkt auf der Oberfläche mit einem Reliefmuster angeordnet werden kann;
- die Werkzeugplatten (6) versehen sind mit einem Befestigungsbereich (3), in welchem die Platten lösbar an der Oberfläche mit einem Reliefmuster befestigbar sind; einem Arbeitsbereich (7), in welchem eine oder mehrere Durchgangsöffnungen (8a bis 8e) angeordnet sind; und Befestigungsmittel (10), welche den in der Gleitschiene angeordneten Befestigungsmitteln (2) zugeordnet sind;
- ein erstes aushärtbares Material mit einer größeren Neigung, an der Werkzeugplatte anzuhaften als an der Oberfläche mit einem Reliefmuster;
- ein zweites aushärtbares Material mit einer sehr großen Neigung, an der Oberfläche mit einem Reliefmuster anzuhaften, und mit einer begrenzten Neigung, an der ersten aushärtbaren Masse anzuhaften.

6. Anordnung nach Anspruch 5, **dadurch gekennzeichnet, dass** die Anordnung eine oder mehrere Adapterplatten (18) beinhaltet, welche längs ihrer Seiten ein oder mehrere Befestigungsmittel (19, 20) aufweisen, die den Befestigungsmitteln (2, 10) der Gleitschiene (1) bzw. der Werkzeugplatte (6) zugeordnet sind, und dass zwei der Seiten der Adapterplatte in einem frei wählbaren Winkel zueinander angeordnet sind, und dass die Befestigungsmittel an den beiden Seiten angeordnet sind.

7. Anordnung nach Anspruch 5 oder 6, **dadurch gekennzeichnet, dass** in jeder Gleitschiene mehrere Befestigungsmittel angeordnet sind, welche einen gegenseitigen Abstand aufweisen, der einem Wiederholabstand in einem Reliefoberflächenmuster entspricht.

8. Anordnung nach Anspruch 7, **dadurch gekennzeichnet, dass** an zwei Seitenoberflächen der Gleitschienen Befestigungsmittel derart angeordnet sind, dass der Abstand zwischen den Befestigungsmitteln auf einer Seite einem Musterwiederholabstand entspricht, und dass der Abstand zwischen den Befestigungsmitteln auf einer anderen Seite einem zweiten Musterwiederholabstand entspricht.

9. Anordnung nach einem oder mehreren der Ansprüche 5 bis 8, **dadurch gekennzeichnet, dass** eine oder mehrere Werkzeugplatten und Gleitschienen aus einem vollständig oder teilweise transparenten Material gefertigt sind, wie beispielsweise aus Acryl, aus Glas oder aus Polycarbonat.

10. Anordnung nach einem oder mehreren der Ansprüche 5 bis 9, **dadurch gekennzeichnet, dass** eine Variante der Werkzeugplatte aus einem flexiblen Material gefertigt ist, und dass Befestigungsmittel an zwei gegenüberliegenden parallelen Seiten der Werkzeugplatte angeordnet sind.

11. Anordnung nach einem oder mehreren der Ansprüche 5 bis 10, **dadurch gekennzeichnet, dass** eine Variante der Werkzeugplatte eben ist und derart geformt ist, dass sie eine gekrümmte Seitenfläche aufweist.

12. Anordnung nach einem oder mehreren der Ansprüche 5 bis 11, **dadurch gekennzeichnet, dass** die Gleitschienen (1) und die Werkzeugplatten (6) lösbar mittels eines Vakuums befestigt sind, wobei in dem Befestigungsbereich der Gleitschienen bzw. der Werkzeugplatten ein oder mehrere Bereiche (3) angeordnet sind, welche von einer flexiblen Dichtung (4) umschlossen sind, und dass innerhalb jedes Bereichs Mittel (5) zur Verbindung mit einer Vakuumquelle vorgesehen sind.

## Revendications

1. Procédé pour réparer des dommages sur des surfaces comportant un motif en relief, particulièrement des surfaces sur lesquelles le motif en relief est répété, **caractérisé en ce que** :
a) un point fixe est identifié dans le motif en relief, et une première barre coulissante (1) est montée par rapport au point fixe à proximité immédiate du dommage ;
b) une plaque de moule (6) est montée sur la première barre coulissante (1) au moyen de moyens de fixation (2, 10) pour fixer la position mutuelle de la plaque de moule et de la première barre coulissante, et la zone endommagée est esquissée sur la plaque de moule ;
c) un second point fixe avec une position identique par rapport au motif répété placé dans une partie non endommagée de la surface avec le motif en relief est identifié, et une seconde barre coulissante (1) identique à la première barre coulissante est montée, ayant la même relation par rapport au second point fixe que ce que la première barre coulissante a avec le premier point fixe, et la seconde barre coulissante est agencée parallèlement à la première barre coulissante,
d) la plaque de moule (6) avec le dommage esquissé est montée sur la seconde barre coulissante par des moyens de fixation (2, 10),
e) une première masse durcissable est injectée par un ou plusieurs trous de passage (8a à 8e) dans la plaque de moule (6) de sorte que la tendance de la masse durcissable à adhérer sur la plaque de moule est supérieure à la tendance de la masse à adhérer sur la surface en relief,
f) lorsque la première masse durcissable est durcie, la plaque de moule (6) est démontée avec la première masse durcie fixée sur la plaque de moule ; et
g) la plaque de moule avec la première masse durcie est remontée au moyen des moyens de fixation sur la première barre coulissante à la distance initiale par rapport au point fixe,
h) une seconde masse durcissable est injectée dans l'espace intermédiaire entre la surface endommagée et la première masse durcie,
i) lorsque la seconde masse est durcie, la plaque de moule est démontée avec la première masse durcie et les barres coulissantes.

2. Procédé selon la revendication 1, **caractérisé en ce que** les étapes g) et h) du procédé sont remplacées par les étapes g1), g2) et h1), dans lequel :
g1) la plaque de moule est démontée avec la première masse durcie fixée sur la plaque,
g2) une seconde masse durcissable est appliquée sur la zone endommagée selon une quantité suffisante pour remplir le dommage ;
h1) la plaque de moule avec la première masse durcie fixée à la plaque est comprimée dans la seconde masse non encore durcie simultanément aux moyens de fixation dans la plaque et les barres coulissantes sont mises en prise.

3. Procédé selon la revendication 1 ou 2, **caractérisé en ce que** la première masse durcissable est du Mould Marker 021 et **en ce que** la seconde masse durcissable est du E-filler avec le durcisseur 756.

4. Procédé selon une ou plusieurs des revendications 1 à 3, **caractérisé en ce qu'**une plaque d'adaptateur (18) peut être agencée entre la barre coulissante (1) et la plaque de moule (6) et **en ce que** la plaque d'adaptateur a deux côtés avec un certain déplacement angulaire mutuel, de préférence 30° et/ou 45°, moyennant quoi les plaques de moule peuvent être agencées selon un angle correspondant par rapport à la barre coulissante.

5. Agencement pour réparer des dommages sur des surfaces comportant un motif en relief, en particulier des surfaces sur lesquelles le motif est répété, se composant d'une ou de plusieurs barres coulissantes (1), d'une ou de plusieurs plaques de moule (6) et de deux masses de fluide durcissables, dans lequel :
les barres coulissantes (1) sont agencées de sorte qu'elles peuvent être fixées de manière détachable sur une surface avec le motif en relief, en outre elles comprennent des moyens de fixation (2) pour fixer une ou plusieurs plaques de moule (6) par rapport à la barre coulissante (1) et un point d'indexation dans la barre coulissante qui peut être agencé sur un point fixe sur la surface comportant le motif en relief ;
les plaques de moule (6) sont agencées avec une zone de fixation (3) dans laquelle les plaques peuvent être fixées de manière détachable sur la surface comportant le motif en relief et sur une zone de travail (7) dans laquelle on agence un ou plusieurs trous de passage (8a à 8e) et des moyens de fixation (10) correspondant aux moyens de fixation (2) agencés dans la barre coulissante ;
un premier matériau durcissable avec une plus grande tendance à adhérer sur la plaque de moule que sur la surface comportant le motif en relief ;
un second matériau durcissable avec une très grande tendance à adhérer sur la surface comportant le motif en relief et une tendance limitée à adhérer sur la première masse durcissable.

6. Agencement selon la revendication 5, **caractérisé en ce que** l'agencement comprend une ou plusieurs plaques d'adaptateur (18) ayant un ou plusieurs moyens de fixation (19, 20) le long de leurs côtés correspondant aux moyens de fixation (2, 10) de la barre coulissante (1) et de la plaque de moule (6) respectivement, et **en ce que** deux des côtés de la plaque d'adaptateur sont agencés avec un angle mutuel arbitraire, et **en ce que** les moyens de fixation sont agencés dans lesdits deux côtés.

7. Agencement selon la revendication 5 ou 6, **caractérisé en ce que** l'on agence plusieurs moyens de fixation dans chaque barre coulissante avec une distance mutuelle correspondant à la distance de répétition dans un motif de surface en relief.

8. Agencement selon la revendication 7, **caractérisé en ce qu'**au niveau des deux surfaces latérales des barres coulissantes, on agence des moyens de fixation de sorte que la distance entre les moyens de fixation sur un côté correspond à une distance de répétition de motif et la distance entre les moyens de fixation au niveau de l'autre côté correspond à une seconde distance de répétition de motif.

9. Agencement selon une ou plusieurs des revendications 5 à 8, **caractérisé en ce qu'**une ou plusieurs plaques de moule et barres coulissantes sont réalisées entièrement ou partiellement avec un matériau transparent, comme par exemple de l'acrylique, du verre ou du polycarbonate.

10. Agencement selon une ou plusieurs des revendications 5 à 9, **caractérisé en ce qu'**une variante de la plaque de moule est réalisée avec un matériau souple et **en ce que** les moyens de fixation sont agencés sur les deux côtés parallèles opposés de la plaque de moule.

11. Agencement selon une ou plusieurs des revendications 5 à 10, **caractérisé en ce qu'**une variante de la plaque de moule est plane et formée avec une face latérale incurvée.

12. Agencement selon une ou plusieurs des revendications 5 à 11, **caractérisé en ce que** les barres coulissantes (1) et les plaques de moule (6) sont montées de manière détachable au moyen du vide, où dans la zone de fixation des barres coulissantes et des plaques de moule respectivement, on agence une ou plusieurs zones (3) encerclées par un joint d'étanchéité souple (4) et **en ce qu'**à l'intérieur de chaque zone, on trouve des moyens de raccordement (5) pour une source de vide.
